Europäisches Patentamt

European Patent Office

Office européen des brevets

(19)

(11) **EP 0 836 670 B1**

(12) **FASCICULE DE BREVET EUROPEEN**

(45) Date de publication et mention
de la délivrance du brevet:
**18.09.2002 Bulletin 2002/38**

(21) Numéro de dépôt: **96946387.6**

(22) Date de dépôt: **23.01.1996**

(51) Int Cl.⁷: **E21B 49/00**

(86) Numéro de dépôt international:
**PCT/FR96/00105**

(87) Numéro de publication internationale:
**WO 96/023127 (01.08.1996 Gazette 1996/35)**

(54) **METHODE ET SYSTEME DE DIAGRAPHIE DE PARAMETRES MECANIQUES DE TERRAINS TRAVERSES PAR UN FORAGE**

VERFAHREN UND VORRICHTUNG ZUM UNTERSUCHEN MECHANISCHER EIGENSCHAFTEN VON DURCH EINE BOHRUNG DURCHQUERTEN FORMATIONEN

METHOD AND SYSTEM FOR LOGGING MECHANICAL PARAMETERS OF FORMATIONS CROSSED THROUGH BY A BOREHOLE

(84) Etats contractants désignés:
**GB IT NL**

(30) Priorité: **25.01.1995 FR 9500938**

(43) Date de publication de la demande:
**22.04.1998 Bulletin 1998/17**

(73) Titulaire: **INSTITUT FRANCAIS DU PETROLE**
**92500 Rueil Malmaison (FR)**

(72) Inventeurs:
• **NAVILLE, Charles**
**91350 Grisny (FR)**
• **GUESNON, Jean**
**78400 Chatou (FR)**
• **MABILE, Claude**
**92140 Clamart (FR)**

(56) Documents cités:
**EP-A- 0 347 295        EP-A- 0 351 902**
**EP-A- 0 409 304        EP-A- 0 558 379**

**Description**

La présente invention concerne une méthode d'investigation géologique des terrains forés, par l'obtention de mesures sensiblement comparables à l'impédance acoustique des terrains traversés par le forage. Les mesures sont obtenues à partir de capteur d'accélération placé dans la garniture de forage entre l'outil de destruction de la roche et des moyens de découplage mécanique disposés entre certains éléments de la garniture. Des moyens adéquats de traitement des mesures d'accélération brutes permettent l'exploitation des résultats de mesure après traitement d'une façon analogue à l'exploitation d'un enregistrement fourni par un outil de diagraphie "sonic" conventionnel, éventuellement couplé avec un autre outil de diagraphie, par exemple de mesure de la densité de la formation.

Ainsi, la présente invention concerne une méthode d'investigation géologique des terrains forés par un outil de forage fixé à l'extrémité d'une garniture de forage, ladite garniture comportant des moyens de mesure fournissant un signal représentatif d'accélération créée par ledit outil. On place dans la garniture de forage des moyens de découplage mécanique, on dispose lesdits moyens de mesure entre ledit outil de forage et lesdits moyens de découplage (voir US-A-5372207); et on obtient une mesure représentative de l'impédance acoustique des terrains forés en traitant ledit signal par une fonction de la vitesse de rotation de l'outil et de la profondeur.

La mesure d'accélération est considérée dans une fenêtre de temps comprise entre 5 et 30 s, et ledit traitement consiste

- à calculer dans cette fenêtre une amplitude efficace représentative dudit signal d'accélération,
- à diviser ladite amplitude par la vitesse de rotation de l'outil, et éventuellement par la vitesse d'avancement élevée à une puissance voisine de 0,1.

Ledit traitement peut aussi consister à multiplier par une fonction de la forme $aPf+b$, où a et b sont des constantes liées à l'environnement du forage, notamment la profondeur et Pf la pression au fond du puits.

Les moyens de mesure de l'accélération peuvent comporter au moins un accéléromètre placé de façon à mesurer un signal représentatif de l'accélération axiale, c'est à dire sensiblement selon l'axe du forage.

Les moyens de mesure de l'accélération peuvent comporter au moins un accéléromètre placé de façon à mesurer un signal représentatif de l'accélération en rotation. Ils peuvent comporter au moins un accéléromètre placé de façon à mesurer un signal représentatif de l'accélération en flexion. Lesdits accéléromètres peuvent avoir à tout instant une orientation connue dans l'espace.

On peut déterminer des changements de nature de terrains forés à partir des variations de ladite mesure représentative de l'impédance acoustique.

On peut déduire des changements de pression de pore des terrains forés à partir des variations de ladite mesure représentative de l'impédance acoustique.

On peut disposer de capteurs sismiques en surface à partir desquels on peu déduire des temps sismiques verticaux, la source étant le bruit de l'outil de forage, par exemple de type tricône. Dans la méthode, on peut calculer une réponse sismique synthétique en temps double vertical à partir de ladite mesure représentative de l'impédance acoustique et desdits temps verticaux.

L'invention concerne également un système d'investigation géologique de terrains forés par un outil de forage fixé à l'extrémité d'une garniture de forage, ladite garniture comportant des moyens de mesure d'un signal représentatif d'accélération créée par ledit outil. Le système comporte des moyens de découplage mécanique, des moyens de mesure placés entre l'outil de forage et lesdits moyens de découplage, et des moyens de traitement du signal représentatif de l'accélération de l'outil fourni par lesdits moyens de mesure. Les moyens de mesure et/ou de traitement peuvent comporter des mémoires de stockage des signaux.

Les moyens de découplage peuvent découpler mécaniquement les mouvements axiaux de la partie inférieure de la garniture par rapport à la partie supérieure de la garniture.

Les moyens de découplage peuvent découpler mécaniquement les mouvements de rotation de la partie inférieure de la garniture par rapport à la partie supérieure de la garniture.

Le système peut comporter des moyens de transmission vers la surface du sol d'au moins une partie du signal représentatif de l'accélération de l'outil.

L'invention sera mieux comprise et ses avantages apparaîtront clairement à la lecture de la description d'exemples, nullement limitatifs, illustrés par les figures annexées parmi lesquelles :

- La figure 1 représente schématiquement l'architecture d'acquisition des mesures selon l'une des réalisation de la présente invention,

- La figure 2 montre un enregistrement du signal brut EBF fournit par un capteur d'accélération axiale,

- La figure 3 montre l'enregistrement de la vitesse de rotation de l'outil de forage,

- la figure 4 montre l'enregistrement de la mesure selon l'invention, après compensation et lissage,

- La figure 5 montre en comparaison sur le même intervalle de terrain, un log d'impédance acoustique fournit par des outils conventionnels de diagraphies.

- La figure 6 montre schématiquement différents moyens de transmission.

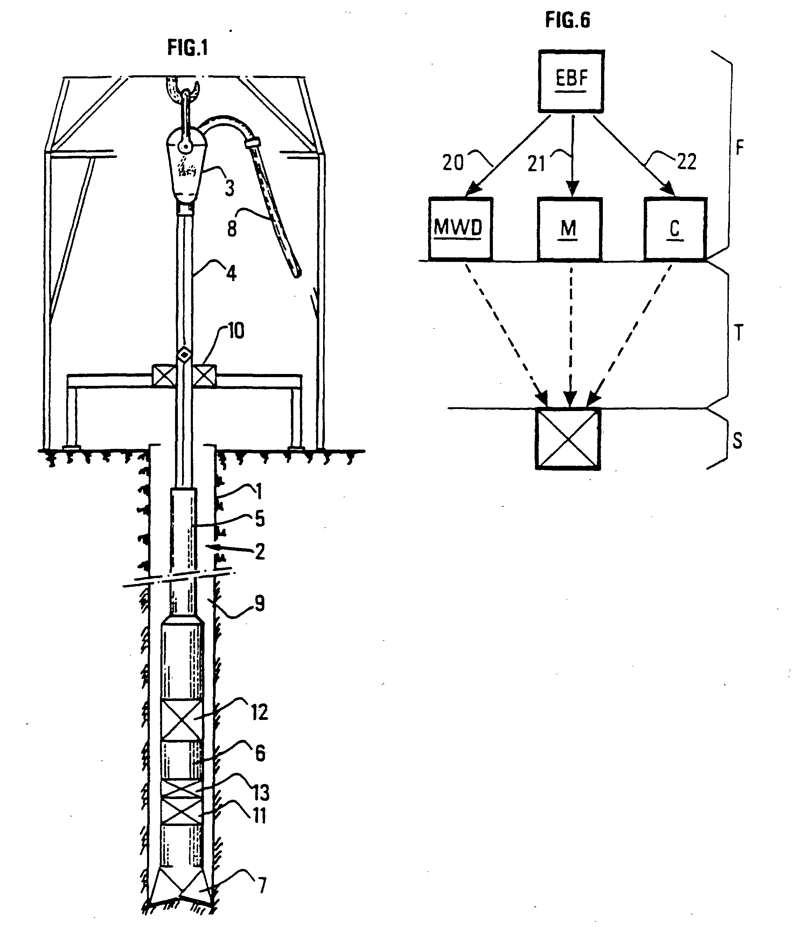

La figure 1 montre un puits 1 en cours de forage à l'aide de la garniture de forage 2. La garniture 2 est suspendue au crochet de forage par l'intermédiaire de la tête d'injection 3, de la tige d'entraînement ou kelly 4. La kelly 4 est vissée sur un train de tiges 5 à l'extrémité duquel est assemblé l'ensemble des masses-tiges 6 se terminant par l'outil de forage 7. Un fluide de forage est injecté dans l'espace intérieur de la garniture par le tube flexible 8 lié à des pompes. Le fluide sort de la garniture par les duses de l'outil 7 puis remonte vers la surface du sol en entraînant les déblais de forage dans l'espace annulaire 9 défini par l'extérieur de la garniture et les parois du puits 1.

L'avancement de l'outil de forage est effectué par la mise en rotation de l'outil, selon le système rotary, par l'intermédiaire de l'ensemble de la garniture de forage entraînée en rotation, soit par la table de rotation 10 et la tige d'entraînement 4, soit par une tête d'injection 3 motorisée du type "power swivel". La mise en rotation de l'outil peut également se faire par l'utilisation d'un moteur de fond hydraulique sur le rotor duquel on fixe l'outil.

Selon l'invention, l'ensemble des masses-tiges 6, couramment appelé "BHA" pour Bottom Hole Assembly, comporte des moyens de mesures 11 comportant au moins des capteurs de mesure de l'accélération induite par le travail de destruction de la roche par l'outil de forage. Comme cela est connu dans la profession, les accélérations peuvent être mesurées par au moins un accéléromètre disposé dan un raccord spécifique. Un tel emploi d'accéléromètre est notamment illustré par les documents US-A-5226332 et FR-92/02273. Pour que les mesures ainsi acquises soient exploitables selon la présente invention, un système de découplage mécanique 12 est disposé dans les masses-tiges au-dessus des moyens de mesures 11 de façon à ce que les vibrations longitudinales (selon l'axe de la garniture) ou transversales créées par l'outil soient découplées mécaniquement de la partie de la garniture constituée par les tiges de forage 5 et les masses-tiges situées au dessus des moyens de découplage 12. Le rôle des moyens de découplage est de supprimer, ou tout au moins de limiter les phénomènes liés à la dynamique du train de tiges, notamment aux vibrations parasites de résonance ou de réflexion.

Les moyens de découplage peuvent être des dispositifs connus comme des "shock absorber" qui sont utilisés par les foreurs pour filtrer les mouvements verticaux crées par l'outil de forage. Ces dispositifs permettent l'entraînement en rotation de l'outil par la garniture de forage et comporte des amortisseurs longitudinaux, sous forme de ressort métallique ou de matière élastique, notamment en élastomère. Il est connu que certains snock absorber ont également une action d'amortissement du mouvement de la rotation, en particulier ceux qui sont fabriqués à partir d'élastomère liant la partie inférieure de l'amortisseur à la partie supérieure. En effet, ceux-ci amortissent également les vibrations en rotation en plus des vibrations longitudinales, l'élastomère transmettant le couple entre la partie supérieure et la partie inférieure.

On peut également utiliser des coulisses de forage ou "bumper sub" comme moyens de découplage mécanique. La coulisse consiste en une pièce mâle qui coulisse dans une pièce femelle, la longueur de la pièce mâle étant appropriée à ce que la longueur de coulissement soit au moins d'environ 1 mètre (3 feet). Les pièces mâle et femelle sont liées en rotation par un système de clés dans des cannelures pour pouvoir transmettre la rotation de l'ensemble de la garniture jusqu'à l'outil de forage. En forage, la position de la coulisse (bumper sub) ne doit pas être en butée supérieure ou inférieure. Dans ce cas, il y découplage mécanique entre ce qui est placé en dessous et en dessus de la coulisse. Bien entendu, cela signifie que le poids sur l'outil est alors limité à la masse des éléments vissés sous la coulisse.

Le dispositif selon l'invention peut comporter des premiers moyens 13 de traitement et d'acquisition de la mesure, proches des moyens de mesure **11,** et préférentiellement dans le même raccord. Ces premiers moyens gèrent les capteurs et leur alimentation électrique, et préférentiellement délivrent un signal en calculant une amplitude efficace dans une fenêtre de temps comprise entre 5 et 30 s. L'amplitude dite "efficace" peut être la racine carrée du pic d'auto-corrélation de l'accélération selon un même axe. Un autre estimateur statistique équivalent peut consister à prendre la moyenne des valeurs absolues du signal dans ladite fenêtre. Ce signal prétraité est représentatif de l'accélération efficace selon l'axe de mesure des capteurs. Bien entendu, tout autre estimateur pourra être utilisé, sans sortir du domaine de la présente invention.

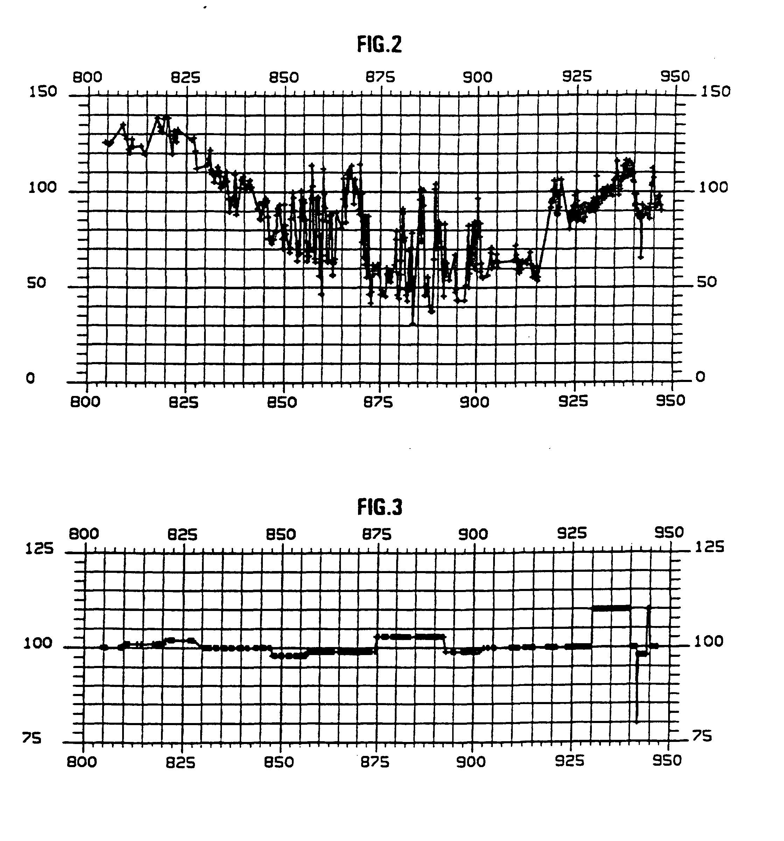

Les courbes des figures 2, 3, 4 et 5 sont portées sur un graphe ayant pour abscisse la profondeur en mètre, ici l'intervalle entre 800 m et 950 m, en ordonnée l'amplitude du signal.

La figure 2 montre un tel signal (EBF) représentatif de l'accélération axiale au cours d'un forage entre environ 800 m et 950 m de profondeur.

La figure 3 montre un enregistrement de la vitesse de rotation pendant le forage du même intervalle. Dans cet exemple, la vitesse de rotation enregistrée est la vitesse de rotation de la table de rotation. Dans d'autres cas, on pourrait exploiter la vitesse de rotation réelle de l'outil en la mesurant ou en la déduisant de capteurs de mesure placés proche de l'outil de forage.

Le signal EBF est compensée par la division du signal EBF par la vitesse de rotation et la multiplication par une fonction de la forme:

$$aPf+b$$

où Pf est la pression de fond de puits, fonction donc de la profondeur verticale du forage et de la masse volumique du fluide, a et b étant des constantes liées à l'environnement du forage, tectonique particulière, pressions anormales, type de shock-absorber, BHA,...

On peut éventuellement diviser EBF également par la vitesse de pénétration élevée à un puissance voisine de 0,1. La vitesse de pénétration, non représentée ici, est une mesure toujours disponible sur un appareil de forage, par exemple en mesurant le déplacement vertical du moufle puis en intégrant par rapport au temps.

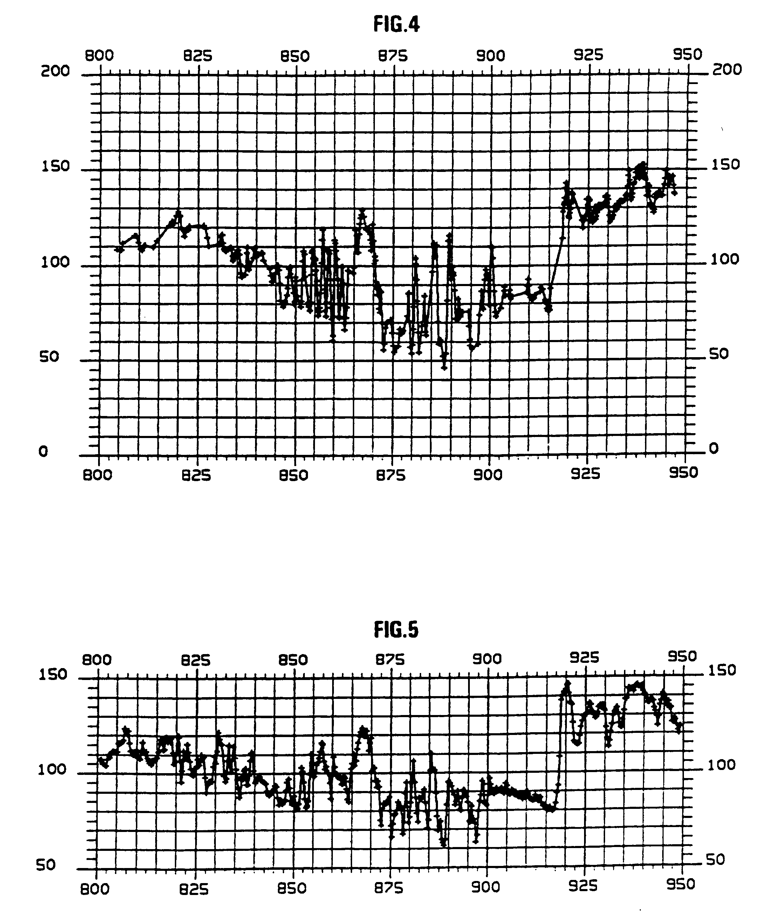

Le signal EBF, une fois compensé, est représenté sur la figure 4.

La figure 5 représente le calcul de l'impédance acoustique des terrains traversés par forage dans l'intervalle considéré, c'est à dire 800-950 m. Cet enregistrement est obtenu par un log acoustique du type "Sonic" qui donne la vitesse Vp des ondes de compression. Cette diagraphie de type connu est généralement effectuée en différé, c'est à dire avec un outil descendu dans le trou au bout d'un câble, le trou étant dégagé de la garniture de forage. Conjointement à la mise en oeuvre d'un outil "sonic", il est courant d'opérer en même temps un outil donnant la densité des terrains traversés, par exemple un outil à rayonnement Gamma-Gamma. L'enregistrement de la figure 5 représente le produit de Vp par la densité, c'est à dire l'impédance acoustique des terrains.

Il est clair, en comparant les courbes de la figure 4 et de la figure 5, que le signal EBF compensé est très voisin de la mesure de l'impédance acoustique que l'on peut obtenir par des moyens connus. En particulier, le phénomène entre les cotes 865 et 870 m est reproduit, ainsi que la variation d'impédance des terrains à la cote 918 m.

Ainsi, la présente invention permet d'obtenir des valeurs d'impédance acoustique à partir du signal délivré par un accéléromètre, ledit signal étant compensé d'une manière simple et déterminée selon le présent exemple.

La manière d'opérer pour mettre en oeuvre le système selon l'invention est fonction des moyens de transmission des mesures.

La figure 6 schématise les configurations principales de transmission du signal vers la surface. Trois zones géographiques sont représentées par les accolades F, T et S. F représente le fond du puits, dans le voisinage de l'outil de forage, T la zone de transmission, intermédiaire entre le fond F et la zone de surface S où la connaissance de la mesure de l'impédance acoustique est utile. La case EBF représente les capteurs d'accélération, leurs moyens de gestion et d'alimentation. Les flèches 20, 21, 22, respectivement dirigées vers les cases MWD, M et C, représentent les liaisons électriques dans trois cas de transmission. La case MWD symbolise un moyen de traitement et de codage du signal EBF, compensé ou non, moyennée ou non, pour être transmis vers la surface par ondes de pression, ou par ondes électromagnétiques. Une telle technique est maintenant bien connu dans la profession. Le débit d'informations à transmettre est compatible avec la capacité d'un tel système. La case M symbolise une mémoire de stockage des valeurs EBF, compensé ou non. Pendant un certain intervalle de forage, les signaux EBF sont stockés au fond. A la fin du forage de l'intervalle, le foreur exécute une opération de déchargement de la mémoire en effectuant une descente dans la garniture de forage d'un connecteur au bout d'un câble, la connexion sur un connecteur complémentaire lié à la mémoire, puis la remontée du câble et du connecteur une fois la mémoire vidée par l'intermédiaire de la liaison électrique. Les mesures sont ensuite traitée en surface. La case C symbolise des moyens électroniques, par exemple d'amplification, de codage ou de multiplexage, lesdits moyens étant reliés par un conducteur continu jusqu'en surface. La ligne continue peut être constituée par des tiges de forage câblées, par un câble coaxial à la garniture de forage, ou les deux dans une configuration mixte. Une telle transmission est illustrée dans les documents FR-92/02273 ou EP-A-526293.

La connaissance simplifiée de l'impédance acoustique des terrains en cours de forage est intéressante pour déduire la nature des roches que l'outil fore. Ainsi, des changements de terrains peuvent être détectés en cours de forage en observant des variations de l'impédance des terrains. La diagraphie fournie par la présente invention vient en complément aux diagraphies instantanées déjà disponibles, comme la vitesse d'avancement, le couple à l'outil de forage, la pression, l'analyse des débris ou des gaz présents dans la boue.

La sécurité du forage peut être augmentée par la détection plus fiable des zones à pression de pores anormales, par exemple les zones de transition des roches couvertures ou des "shallow gas" (ou gaz localisés à de faibles profondeurs).

**Revendications**

1. Méthode d'investigation géologique des terrains forés par un outil de forage (7) fixé à l'extrémité d'une garniture de forage (2), ladite garniture comportant des moyens de mesure (11) fournissant un signal représentatif d'accélération créée par ledit outil, dans laquelle on place des moyens de découplage mécanique (12), lesdits moyens de mesure étant disposés entre ledit outil de forage (7) et lesdits moyens de découplage (12), **caractérisé en ce que** l'on traite ledit signal par une fonction de la vitesse de rotation de l'outil et de la profondeur pour obtenir une mesure représentative de l'impédance acoustique des terrains forés, **en ce que** la mesure d'accélération est considérée dans une fenêtre de temps comprise entre 5 et 30 s, et **en ce que** ledit traitement consiste notamment :

-  à calculer dans cette fenêtre une amplitude efficace représentative dudit signal d'accélération,

-  à diviser ladite amplitude par la vitesse de rotation de l'outil, et éventuellement par la vitesse d'avancement élevée à une puissance voisine de 0,1.

2.  Méthode selon la revendication 1, **caractérisée en ce que** ledit traitement consiste à multiplier par une fonction de la forme aPf+b, où a et b sont des constantes liées à l'environnement du forage, notamment la profondeur et Pf la pression au fond du puits.

3.  Méthode selon l'une des revendications 1 ou 2, **caractérisée en ce que** les moyens de mesure (11) de l'accélération comportent au moins un accéléromètre placé de façon à mesurer un signal représentatif de l'accélération axiale, c'est-à-dire sensiblement selon l'axe du forage.

4.  Méthode selon l'une des revendications précédentes, **caractérisée en ce que** les moyens de mesure de l'accélération comportent au moins un accéléromètre placé de façon à mesurer un signal représentatif de l'accélération en rotation.

5.  Méthode selon l'une des revendications précédentes, **caractérisée en ce que** l'on détermine des changements de nature de terrains forés à partir des variations de ladite mesure représentative de l'impédance acoustique.

6.  Méthode selon l'une des revendications précédentes, **caractérisée en ce que** l'on déduit des changements de pression de pore des terrains forés à partir des variations de ladite mesure représentative de l'impédance acoustique.

7.  Méthode selon l'une des revendications précédentes, dans laquelle on dispose de capteurs sismiques en surface à partir desquels on déduit des temps sismiques verticaux, la source étant le bruit de l'outil de forage, **caractérisée en ce que** l'on calcule une réponse sismique synthétique en temps double vertical sismique à partir de ladite mesure représentative de l'impédance acoustique et desdits temps verticaux.

8.  Système d'investigation géologique pour la mise en oeuvre de la méthode selon les revendications 1 à 7.

**Patentansprüche**

1.  Verfahren zur geologischen Forschung der mittels eines am Ende einer Bohrstangengarnitur (2) angeordneten Bohrwerkzeuges (7) durchgebohrten Formationen, wobei die besagte Bohrstangengarnitur Meßmittel (11) beträgt, die ein die mittels des besagten Werkzeuges erzeugten Beschleunigung darstellendes Signal liefern, in welcher mechanische Entkopplungsmittel (12) angeordnet sind, wobei die besagten Meßmittel zwischen dem besagten Bohrwerkeug (7) und den besagten Entkopplungsmitteln (12) liegen, **dadurch gekennzeichnet, daß** das besagte Signal mittels einer Funktion der Drehgeschwindigkeit des Werkzeuges und der Tiefe verarbeitet wird, um ein die akustische Impedanz der durchgebohrten Formationen darstellendes Maß zu erhalten, daß das Beschleunigungsmaß in einer Zeitspanne zwischen 5 und 30 s betrachtet wird, und daß die besagte Verarbeitung insbesondere darin besteht, daß :

-  eine das besagte Beschleunigungssignal darstellende wirksame Amplitude in dieser Zeitspanne berechnet wird,

-  die besagte Amplitude durch die Drehgeschwindigkeit des Werkzeuges und eventuell durch die in eine Potenz in der Nähe von 0,1 erhobene Vortriebsgeschwindigkeit dividiert wird.

2.  Verfahren gemäß Anspruch 1, **dadurch gekennzeichnet, daß** die besagte Verarbeitung darin besteht, daß durch eine Funktion der Form aPf+b multipliziert wird, wobei a und b mit der Bohrlochumgebung verbundene Konstanten sind, besonders die Tiefe, und Pf der Druck am Bohrlochboden.

3.  Verfahren gemäß einem der Ansprüche 1 oder 2, **dadurch gekennzeichnet, daß** die Beschleunigungsmeßmittel (11) mindestens einen Beschleunigungsmesser enthalten, der so angeordnet ist, daß ein die Axialbeschleunigung darstellendes Signal, d.h. wesentlich entlang der Bohrachse, gemessen wird.

4.  Verfahren gemäß irgendeinem der vorstehenden Ansprüche, **dadurch gekennzeichnet, daß** die Beschleunigungsmeßmittel mindestens einen Beschleunigungsmesser enthalten, der so angeordnet ist, daß ein die Drehbeschleunigung darstellendes Signal gemessen wird.

5.  Verfahren gemäß irgendeinem der vorstehenden Ansprüche, **dadurch gekennzeichnet, daß** Zustandsänderungen der durchgebohrten Formationen aus den Änderungen des besagten die akustische Impedanz darstellenden Maßes bestimmt werden.

6. Verfahren gemäß irgendeinem der vorstehenden Ansprüche, **dadurch gekennzeichnet, daß** Porendruckänderungen der durchgebohrten Formationen aus den Änderungen des besagten die akustische Impedanz darstellenden Maßes abgeleitet werden.

7. Verfahren gemäß irgendeinem der vorstehenden Ansprüche, **dadurch gekennzeichnet, daß** seismische Meßfühler am Erdboden angeordnet sind, mittels welchen Vertikalzeiten abgeleitet werden, wobei die Quelle das Geräusch des Werkzeuges ist, **dadurch gekennzeichnet, daß** eine synthetische seismische Antwort in Doppelvertikalzeit aus dem besagten die akustische Impedanz darstellenden Maß und den besagten Vertikalzeiten berechnet wird.

8. Geologisches Forschungssystem zur Implementierung des Verfahrens gemäß Ansprüche 1 bis 7.

**Claims**

1. A method of geological exploration of formations drilled by a drill bit (7) fastened to the end of a drill string (2), said string comprising measuring means (11) delivering a signal representative of an acceleration created by said bit, wherein mechanical uncoupling means (12) are placed in the drill string, said measuring means being arranged between said drill bit (7) and said uncoupling means (12), **characterised in that** said signal is processed by a function 'of the rotating speed of the bit and of the depth to obtain a measurement representative of the acoustic impedance of the drilled formations, **in that** the acceleration measurement is considered in a time window ranging between 5 and 30 s, and **in that** said processing notably consists in :

   - calculating in this window an effective amplitude representative of said acceleration signal,

   - dividing said amplitude by the rotating speed of the drill bit, and possibly by the rate of penetration raised to a power close to 0.1.

2. A method as claimed in claim 1, **characterised in that** said processing consists in multiplying by a function of the form aPf+b, where a and b are constants related to the borehole environment, notably the depth, and Pf the bottomhole pressure.

3. A method as claimed in any one of claims 1 or 2, wherein the acceleration measuring means (11) comprise at least one accelerometer placed so as to measure a signal representative of the axial acceleration, i.e. substantially along the axis of the borehole.

4. A method as claimed in any one of the previous claims, **characterised in that** the acceleration measuring means comprise at least one accelerometer placed so as to measure a signal representative of the rotational acceleration.

5. A method as claimed in any one of the previous claims, **characterised in that** changes in the nature of the drilled formations are determined from variations in said measurement representative of the acoustic impedance.

6. A method as claimed in any one of the previous claims, **characterised in that** pore pressure changes in the drilled formations are deduced from variations in said measurement representative of the acoustic impedance.

7. A method as claimed in any one of the previous claims, wherein seismic pickups from which seismic uphole times are deduced are arranged at the surface, the source being the noise of the drill bit, **characterised in that** a synthetic seismic response in uphole two-way time is calculated from said measurement representative of the acoustic impedance and said uphole times.

8. A geological exploration system for implementing the method as claimed in any one of claims 1 to 7.

**FIG.1**

**FIG.6**

## FIG.2

## FIG.3

## FIG.4

## FIG.5